# EUROPEAN PATENT APPLICATION

(11) **EP 4 763 012 A1**
(43) Date of publication of application: **24.06.2026**
(21) Application number: 25206192.4
(22) Date of filing: 01.10.2025
(51) Int. Cl.: A47J 37/06

(54) **A DUAL-POT AIR FRYER WITH TOP AND BOTTOM BACK BLOWING**

(30) Priority: 20.12.2024 CN 202423166451 U; 20.12.2024 CN 202423167896 U
(71) Applicant: Zhejiang Biyi Electric Appliance Co., Ltd., Yuyao, Zhejiang 315400 (CN)
(72) Inventor: LOU, Hongxian, Yuyao, Zhejiang, 315400 (CN); ZANG, Hao, Yuyao, Zhejiang, 315400 (CN); ZHOU, Licong, Yuyao, Zhejiang, 315400 (CN)
(74) Representative: ZHAOffice SPRL

(57) **Abstract**

The invention introduces a Dual-Pot Air Fryer with Top and Bottom Back Blowing to reduce the temperature difference between its upper and lower chambers. Key features include a curved top metal insulation layer with a brim edge, which slopes upward from the front to the back. A back metal insulation cover is fixed outside the centrifugal fan blade. The pot mouth abuts this insulation layer, creating a curved surface gap at the rear. This gap's inner insulation layer has upper air outlet holes and lower air inlet holes. The air inlet holes align with honeycomb openings on the lower pot body, optimizing airflow for uniform heating and simultaneous cooking of different foods.

## Description

### Technical Field

The present invention relates to air fryers, specifically a dual-pot air fryer with top and bottom back blowing.

### Background Technology

An air fryer is a new household appliance that uses high-speed air circulation technology to fry food. Compared to traditional electric fryers, the food it produces can reduce oil content by 80%. It is easy to clean in daily use, safe, and economical, and is favored by people. To improve the efficiency of air fryers, some air fryers are equipped with upper and lower dual pots or left and right dual pots. Some air fryers adopt an upper and lower dual-layer body and pot structure design, with the upper layer having a heating tube and fan blade at the top, and the lower layer having another heating tube and another fan blade at the rear, such as the application number 202322669357.6 disclosed in Chinese patent literature, authorization announcement date 2024.04.26, utility model name "A Dual-Layer Air Fryer". However, the above products and similar products have a large temperature difference between the upper and lower chambers, making it difficult to simultaneously process and cook foods requiring high temperatures.

### Summary of the Invention

To overcome the above shortcomings, the purpose of the present invention is to provide a dual-pot air fryer with top and bottom back blowing in this field, to solve the technical problem that existing upper and lower dual-pot air fryers have a large temperature difference between the upper and lower chambers, making it difficult to simultaneously process and cook foods requiring high temperatures, resulting in poor food cooking and processing effects. This purpose is achieved through the following technical solutions.

A dual-pot air fryer with top and bottom back blowing, the air fryer is divided into upper and lower layers, and corresponding upper and lower chambers; the lower chamber back of the air fryer is provided with a lower metal centrifugal fan blade and a lower plastic centrifugal fan blade, the motor shaft at the lower motor outside the lower metal insulation layer in the body is connected to the lower metal centrifugal fan blade and the lower plastic centrifugal fan blade, and the top of the lower chamber is provided with a lower heating tube; the top of the upper chamber is sequentially provided with an upper heating tube and an upper metal centrifugal fan blade, the outside of the upper metal insulation layer in the body at the top is sequentially provided with an upper plastic centrifugal fan blade and an upper motor, the motor shaft at the upper motor is connected to the upper metal centrifugal fan blade and the upper plastic centrifugal fan blade; one side of the upper and lower chambers is respectively provided with an opening and the inserted upper pot body and lower pot body. The key points of its structural design are that the height of the top metal insulation layer at the lower heating tube at the top of the lower chamber increases from the front of the body opening side to the back in a curved surface, the top metal insulation layer on the body opening side above the pot mouth at the lower pot body in the lower chamber is provided with a brim edge, the inner metal insulation layer at the lower metal centrifugal fan blade and the top metal insulation layer integrally form the lower metal insulation layer corresponding to the body side opening, the outside of the lower metal centrifugal fan blade at the back of the lower metal insulation layer is provided with a back metal insulation cover fixed to the lower metal insulation layer, the pot mouth at the pot body below the brim edge abuts against the top metal insulation layer, a gap of the curved surface is provided between the top metal insulation layer at the back and the pot mouth at the lower pot body, the upper part of the inner metal insulation layer at the back of the gap is provided with air outlet holes, the lower part of the inner metal insulation layer at the back below the air outlet holes is provided with air inlet holes, and the air inlet holes are aligned with the honeycomb openings at the front end of the back of the lower pot body; the top metal insulation layer groove of the upper metal insulation layer in the upper chamber is provided with the upper heating tube and the upper metal centrifugal fan blade, the outer diameter of the upper plastic centrifugal fan blade is provided with an upper air guide cover fixed to the top of the top metal insulation layer, and the outer diameter of the lower plastic centrifugal fan blade is provided with a lower air guide cover fixed to the back of the back metal insulation cover; the body is provided with air outlets and air inlets, the upper air guide cover and the lower air guide cover are respectively connected to the air outlets of the body, and the upper heating tube, upper motor, lower heating tube, and lower motor are respectively connected to the power board assembly in the body through lines.

The inner wall on the other side symmetric to the front end of the back of the lower pot body is provided with equidistantly distributed and protruding guide ribs, the guide ribs are integrally stamped and formed with the lower pot body; or the guide ribs are set on a guide piece, and the guide piece is installed on the inner wall of the lower pot body. The above structure further enhances the air guiding and circulation effects in the lower pot.

The back in the upper chamber at the partition in the upper and lower chambers is provided with a power board assembly and an external power cord, the top corner of the body above the upper handle on one side of the upper pot body extending out of the upper chamber is provided with a PCB control assembly, and the PCB control assembly is connected to the power board assembly through lines. The above is an embodiment of setting the power board assembly through the partition in the body.

The outer side of the upper handle aligns with the lower handle below, and the outer sides of the upper pot body and lower pot body in a vertical or diagonal line, the back body outer diameters of the upper and lower chambers align or are stepped, and the volumes of the upper pot body and lower pot body are the same or different. The above upper and lower pot body volumes, body back space, and handle side alignment surfaces are set according to actual conditions.

One side at the upper heating tube and lower heating tube in the upper and lower chambers respectively extends out of the upper metal insulation layer and lower metal insulation layer and is provided with NTC temperature sensors, and the NTC temperature sensors are respectively connected to the power board assembly in the body through lines. This facilitates further accurate recording of the temperature conditions in the upper and lower chambers through the NTC temperature sensors, convenient for automatic adjustment of the control program.

The upper motor at the upper air guide cover and the lower motor at the lower air guide cover are respectively provided with hollow holes, the outer diameters of the upper metal lining and lower metal lining in the upper and lower chambers respectively form a main cold air chamber with the body inner diameter and base, the main cold air chamber is divided into upper and lower main cold air chambers through a plastic partition, the hoods at the upper frying basket lining and lower frying basket lining in the upper and lower chambers are respectively provided with upper and lower secondary cold air chambers, the upper and lower edges of the hoods at the upper frying basket lining and lower frying basket lining in the upper and lower secondary cold air chambers are respectively provided with through holes, the through holes respectively communicate with the lower holes at the edge of the base of the lower chamber opening of the body, and the upper holes at the edge of the upper metal lining of the upper chamber opening of the body, the body side outer diameter at the plastic partition is respectively provided with upper air outlets and lower air outlets above and below, the upper air guide cover and lower air guide cover are respectively connected to the upper air outlets and lower air outlets of the body, the other side of the body or the base is provided with air inlets, and the edges of the plastic partition on both sides of the body opening are respectively provided with notches. The base above the inner diameter at the bottom opening of the body is provided with a plastic bottom plate, the lower holes at the edge of the base of the lower chamber opening of the body are set at one end of the plastic bottom plate, the plastic bottom plate is provided with through holes, and the external power cord of the power board assembly in the body extends out of one side of the base through the plastic partition and plastic bottom plate. This facilitates improving the stability of the bottom of the lower chamber and the stability inside the body.

The upper air outlets and lower air outlets of the body are simultaneously set on the upper and lower sides of the plastic partition in the body respectively. The above is an embodiment where the upper air outlets and lower air outlets are simultaneously set on the upper and lower sides of the body.

The air inlets of the base are equidistantly distributed openings at the bottom or both sides. This facilitates air intake through the air inlets on both sides of the base.

Both sides of the upper metal lining and lower metal lining in the body, and the back of the upper metal lining are respectively provided with stamped concave-convex surfaces. This facilitates enhancing its air guiding effect.

The through holes at the upper and lower edges of the hoods of the upper frying basket lining and lower frying basket lining in the upper and lower secondary cold air chambers respectively communicate through the partition holes at the plastic partition, and one end of the plastic partition extends out and is located between the body side openings at the upper and lower edges of the hoods of the upper frying basket lining and lower frying basket lining. The above is an embodiment where the upper and lower secondary cold air chambers communicate through the partition holes at the plastic partition.

The notches of the plastic partition or are set at the back, and the body back outer diameter corresponding to the notches is respectively provided with upper air outlets and lower air outlets above and below.

The present invention has a simple and reasonable structural design, good flow guiding and heating effects, fast food cooking and processing, good heat dissipation and cold air effects, long service life, good safety and stability, especially convenient for simultaneous processing and cooking of foods requiring high temperatures in the upper and lower chambers; it is suitable for use as a dual-pot air fryer with top and bottom back blowing, as well as structural improvements of similar products.

### Description of Drawings

FIG. 1 is a schematic cross-sectional structural view of an embodiment of the present invention, where the arrows respectively indicate the hot air circulation directions in the upper and lower pots.
FIG. 2 is a schematic three-dimensional structural view of FIG. 1.
FIG. 3 is a schematic structural view of the rear part of the upper and lower metal insulation layers in FIG. 4, omitting components such as the body shell and partition.
FIG. 4 is a schematic structural view of the working principle of the cold air system in FIG. 1, where the arrows indicate the cold air circulation and heat dissipation directions.
FIG. 5 is a schematic internal structural view after partial cross-section of the rear body in the three-dimensional structure of FIG. 4.
FIG. 6 is a schematic front three-dimensional structural view of FIG. 5, where the upper pot body and lower pot body are in a removed state.

Reference numerals and names: 1. PCB control assembly, 2. Upper metal insulation layer, 3. Upper heating tube, 4. Upper handle, 5. Upper pot body, 6. Upper grill, 7. Lower metal insulation layer, 8. Lower heating tube, 9. Lower handle, 10. Lower pot body, 11. Lower grill, 12. Lower metal centrifugal fan blade, 13. Lower plastic centrifugal fan blade, 14. Lower motor, 15. Power board assembly, 16. Air outlet, 17. Upper metal centrifugal fan blade, 18. Upper plastic centrifugal fan blade, 19. Upper motor, 20. Back metal insulation cover, 21. NTC temperature sensor, 22. Upper metal lining, 23. Upper frying basket lining, 24. Plastic partition, 2401. Notch, 25. Lower frying basket lining, 26. Lower metal lining, 27. Base, 28. Lower air guide cover, 29. Lower air outlet, 30. Upper air outlet, 31. Upper air guide cover, 32. Plastic bottom plate.

### Embodiments

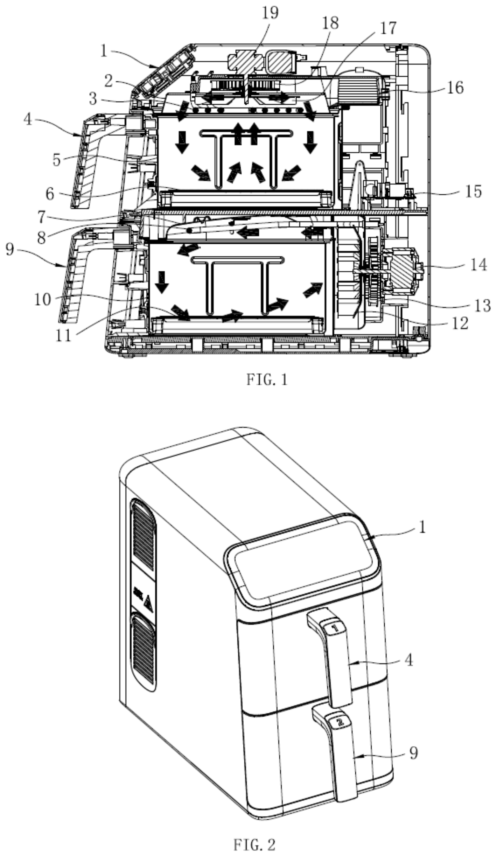

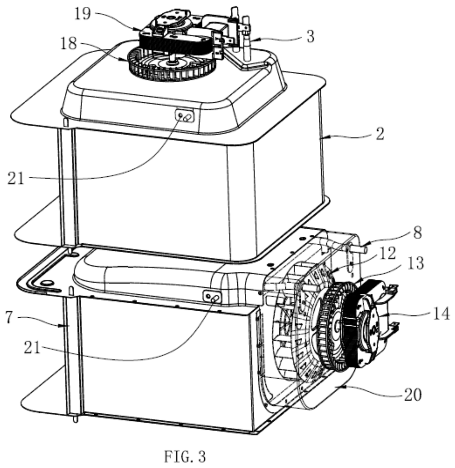

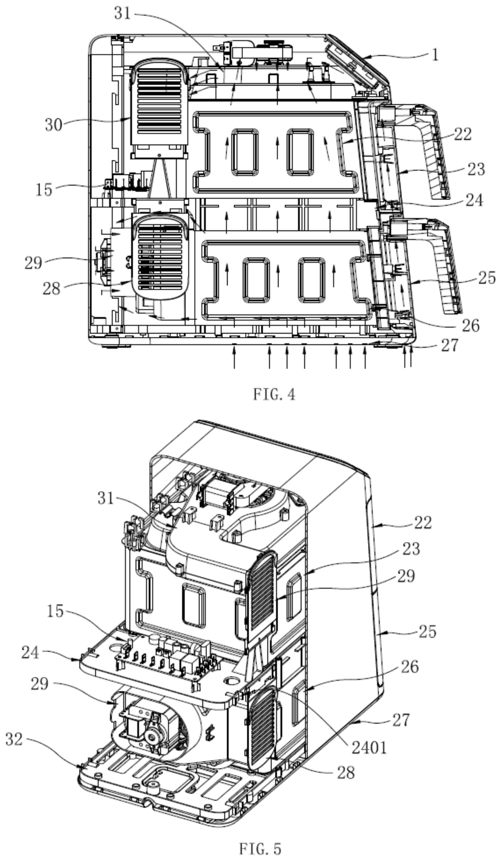

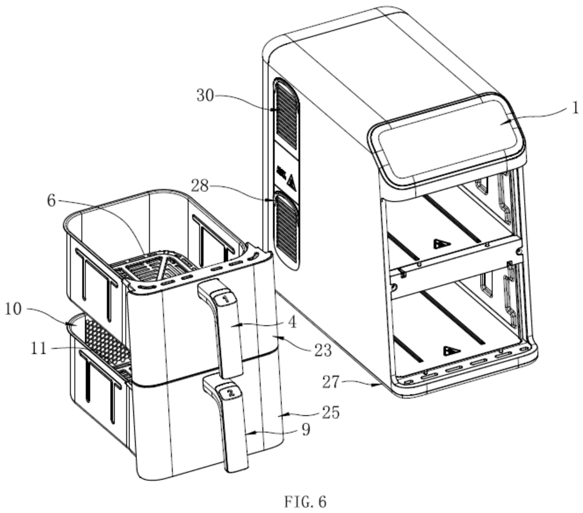

Now, in conjunction with the drawings, the structure and use of the present invention are further described. As shown in FIG. 1- FIG. 6, the air fryer is divided into upper and lower layers, and corresponding upper and lower chambers; the lower chamber back of the air fryer is provided with a lower metal centrifugal fan blade 12 and a lower plastic centrifugal fan blade 13, the motor shaft at the lower motor 14 outside the lower metal insulation layer 7 in the body is connected to the lower metal centrifugal fan blade and the lower plastic centrifugal fan blade, and the top of the lower chamber is provided with a lower heating tube 8; the top of the upper chamber is sequentially provided with an upper heating tube 3 and an upper metal centrifugal fan blade 17, the outside of the upper metal insulation layer 2 in the body at the top is sequentially provided with an upper plastic centrifugal fan blade 18 and an upper motor 19, the motor shaft at the upper motor is connected to the upper metal centrifugal fan blade and the upper plastic centrifugal fan blade; one side of the upper and lower chambers is respectively provided with an opening and the inserted upper pot body 5 and lower pot body 10. The height of the top metal insulation layer at the lower heating tube at the top of the above lower chamber increases from the front of the body opening side to the back in a curved surface, the top metal insulation layer on the body opening side above the pot mouth at the lower pot body in the lower chamber is provided with a brim edge, the inner metal insulation layer at the lower metal centrifugal fan blade and the top metal insulation layer integrally form the lower metal insulation layer corresponding to the body side opening, the outside of the lower metal centrifugal fan blade at the back of the lower metal insulation layer is provided with a back metal insulation cover 20 fixed to the lower metal insulation layer, the pot mouth at the pot body below the brim edge abuts against the top metal insulation layer, a gap of the curved surface is provided between the top metal insulation layer at the back and the pot mouth at the lower pot body, the upper part of the inner metal insulation layer at the back of the gap is provided with air outlet holes, the lower part of the inner metal insulation layer at the back below the air outlet holes is provided with air inlet holes, and the air inlet holes are aligned with the honeycomb openings at the front end of the back of the lower pot body; the top metal insulation layer groove of the upper metal insulation layer in the upper chamber is provided with the upper heating tube and the upper metal centrifugal fan blade, the outer diameter of the upper plastic centrifugal fan blade is provided with an upper air guide cover fixed to the top of the top metal insulation layer, the outer diameter of the lower plastic centrifugal fan blade is provided with a lower air guide cover fixed to the back of the back metal insulation cover; the body is provided with air outlets and air inlets, the upper air guide cover and the lower air guide cover are respectively connected to the air outlets of the body, and the upper heating tube, upper motor, lower heating tube, and lower motor are respectively connected to the power board assembly 15 in the body through lines.

The inner wall on the other side symmetric to the front end of the back of the above lower pot body is provided with equidistantly distributed and protruding guide ribs, the guide ribs are integrally stamped and formed with the lower pot body; or the guide ribs are set on a guide piece, and the guide piece is installed on the inner wall of the lower pot body. The back in the upper chamber at the partition in the upper and lower chambers is provided with a power board assembly and an external power cord, the top corner of the body above the upper handle on one side of the upper pot body extending out of the upper chamber is provided with a PCB control assembly 1, and the PCB control assembly is connected to the power board assembly through lines. The outer side of the upper handle aligns with the lower handle below, and the outer sides of the upper pot body and lower pot body in a diagonal line, the back body outer diameters of the upper and lower chambers align, and the volumes of the upper pot body and lower pot body are the same. One side at the upper heating tube and lower heating tube in the upper and lower chambers respectively extends out of the upper metal insulation layer and lower metal insulation layer and is provided with NTC temperature sensors 21, and the NTC temperature sensors are respectively connected to the power board assembly in the body through lines. The above upper pot body is provided with an upper grill 6, and the lower pot body is provided with a lower grill 11.

The upper pot of the dual-pot air fryer adopts back blowing, air is collected from the center of the upper metal centrifugal fan blade, then blows to the surrounding walls of the upper pot body via the surrounding walls of the upper metal insulation layer, then collects toward the center upward via the surrounding of the grill, finally passes through the surface of the upper heating tube, and returns to the center of the upper metal centrifugal fan blade. The lower pot adopts back blowing, air is collected from the center of the lower metal centrifugal fan blade, and under the guiding effect of the lower metal insulation layer, blows to the lower heating tube via the matching place of the lower metal insulation layer, thereby guiding the heated hot air along the lower metal insulation layer toward the handle position, downward to the lower pot body, then blows from the lower handle end of the lower pot body to the front end of the lower pot body, passes through the honeycomb openings at the front end of the lower pot body, and finally returns to the center of the lower metal centrifugal fan blade.

The upper motor at the above upper air guide cover and the lower motor 14 at the lower air guide cover are respectively provided with hollow holes, the outer diameters of the upper metal lining 22 and lower metal lining 26 in the upper and lower chambers respectively form a main cold air chamber with the body inner diameter and base 27, the main cold air chamber is divided into upper and lower main cold air chambers through a plastic partition, the hoods at the upper frying basket lining 23 and lower frying basket lining 25 in the upper and lower chambers are respectively provided with upper and lower secondary cold air chambers, the upper and lower edges of the hoods at the upper frying basket lining and lower frying basket lining in the upper and lower secondary cold air chambers are respectively provided with through holes, the through holes respectively communicate with the lower holes at the edge of the base of the lower chamber opening of the body, and the upper holes at the edge of the upper metal lining of the upper chamber opening of the body, the body side outer diameter at the plastic partition is respectively provided with upper air outlets 30 and lower air outlets 29 above and below, the upper air guide cover and lower air guide cover are respectively connected to the upper air outlets and lower air outlets of the body, the other side of the body or the base is provided with air inlets, and the edges of the plastic partition on both sides of the body opening are respectively provided with notches 2401.

The base above the inner diameter at the bottom opening of the above body is provided with a plastic bottom plate 32, the lower holes at the edge of the base of the lower chamber opening of the body are set at one end of the plastic bottom plate, the plastic bottom plate is provided with through holes, and the external power cord of the power board assembly in the body extends out of one side of the base through the plastic partition and plastic bottom plate. The upper air outlets and lower air outlets of the body are simultaneously set on the upper and lower sides of the plastic partition in the body respectively, the air inlets of the base are equidistantly distributed openings at the bottom or both sides. Both sides of the upper metal lining and lower metal lining in the body, and the back of the upper metal lining are respectively provided with stamped concave-convex surfaces. The through holes at the upper and lower edges of the hoods of the upper frying basket lining and lower frying basket lining in the upper and lower secondary cold air chambers respectively communicate through the partition holes at the plastic partition, and one end of the plastic partition extends out and is located between the body side openings at the upper and lower edges of the hoods of the upper frying basket lining and lower frying basket lining. The notches of the plastic partition or are set at the back, and the body back outer diameter corresponding to the notches is respectively provided with upper air outlets and lower air outlets above and below.

The cold air of the cold air system enters through the openings on the base, part of it is drawn upward by the upper and lower secondary cold air chambers at the openings on the upper and lower frying basket linings, via the outside of the upper metal lining in the body and the PCB assembly, thereby sucked to the air inlet holes of the top upper air guide cover, then blown to the upper air outlet through the cold air channel formed by the upper plastic centrifugal fan blade and the upper air guide cover, and discharged outside the body; another part via the outside of the lower metal lining in the body, where part passes through the notches on the middle plastic partition, drawn to the outside of the upper metal lining, skipping the upper metal insulation inner layer, back to the air inlet holes of the upper air guide cover, then blown to the upper air outlet through the cold air channel formed by the upper plastic centrifugal fan blade and the upper air guide cover, and discharged outside the body; the other part via the outside of the lower metal lining in the body, back to the enclosure of the lower air guide cover, then blown to the lower air outlet through the cold air channel formed by the lower plastic centrifugal fan blade and the lower air guide cover, and discharged outside the body.

In use, the lower pot body is removed through the lower handle in the dual-pot air fryer, or the upper pot body is removed through the upper handle, after placing food on the lower grill in the lower pot body, the lower pot body is reinserted into the lower body through the lower handle, or after placing food on the upper grill in the upper pot body, the upper pot body is reinserted into the upper body through the upper handle; finally, press the corresponding cooking button on the control panel of the PCB control assembly, and the corresponding food in the lower pot body or upper pot body can be automatically processed and cooked.

## Claims

1. A dual-pot air fryer with top and bottom back blowing, the air fryer is divided into upper and lower layers, and corresponding upper and lower chambers; the lower chamber back of the air fryer is provided with a lower metal centrifugal fan blade (12) and a lower plastic centrifugal fan blade (13), the motor shaft at the lower motor (14) outside the lower metal insulation layer (7) in the body is connected to the lower metal centrifugal fan blade and the lower plastic centrifugal fan blade, and the top of the lower chamber is provided with a lower heating tube (8); the top of the upper chamber is sequentially provided with an upper heating tube (3) and an upper metal centrifugal fan blade (17), the outside of the upper metal insulation layer (2) in the body at the top is sequentially provided with an upper plastic centrifugal fan blade (18) and an upper motor (19), the motor shaft at the upper motor is connected to the upper metal centrifugal fan blade and the upper plastic centrifugal fan blade; one side of the upper and lower chambers is respectively provided with an opening and the inserted upper pot body (5) and lower pot body (10); **characterized in that** the height of the top metal insulation layer at the lower heating tube (8) at the top of the lower chamber increases from the front of the body opening side to the back in a curved surface, the top metal insulation layer on the body opening side above the pot mouth at the lower pot body (10) in the lower chamber is provided with a brim edge, the inner metal insulation layer at the lower metal centrifugal fan blade (12) and the top metal insulation layer integrally form the lower metal insulation layer corresponding to the body side opening, the outside of the lower metal centrifugal fan blade at the back of the lower metal insulation layer is provided with a back metal insulation cover (20) fixed to the lower metal insulation layer, the pot mouth at the pot body below the brim edge abuts against the top metal insulation layer, a gap of the curved surface is provided between the top metal insulation layer at the back and the pot mouth at the lower pot body, the upper part of the inner metal insulation layer at the back of the gap is provided with air outlet holes, the lower part of the inner metal insulation layer at the back below the air outlet holes is provided with air inlet holes, and the air inlet holes are aligned with the honeycomb openings at the front end of the back of the lower pot body; the top metal insulation layer groove of the upper metal insulation layer (2) in the upper chamber is provided with the upper heating tube (3) and the upper metal centrifugal fan blade (17), the outer diameter of the upper plastic centrifugal fan blade (18) is provided with an upper air guide cover (31) fixed to the top of the top metal insulation layer, the outer diameter of the lower plastic centrifugal fan blade (13) is provided with a lower air guide cover (28) fixed to the back of the back metal insulation cover; the body is provided with air outlets and air inlets, the upper air guide cover and the lower air guide cover are respectively connected to the air outlets of the body, and the upper heating tube, upper motor (19), lower heating tube, and lower motor (14) are respectively connected to the power board assembly (15) in the body through lines.

2. The dual-pot air fryer with top and bottom back blowing according to claim 1, **characterized in that** the inner wall on the other side symmetric to the front end of the back of the lower pot body (10) is provided with equidistantly distributed and protruding guide ribs, the guide ribs are integrally stamped and formed with the lower pot body; or the guide ribs are set on a guide piece, and the guide piece is installed on the inner wall of the lower pot body.

3. The dual-pot air fryer with top and bottom back blowing according to claim 1, **characterized in that** the back in the upper chamber at the plastic partition (24) in the upper and lower chambers is provided with a power board assembly (15) and an external power cord, the top corner of the body above the upper handle (4) on one side of the upper pot body (5) extending out of the upper chamber is provided with a PCB control assembly (1), and the PCB control assembly is connected to the power board assembly through lines.

4. The dual-pot air fryer with top and bottom back blowing according to claim 1, **characterized in that** the outer side of the upper handle (4) aligns with the lower handle (9) below, and the outer sides of the upper pot body (5) and lower pot body (10) in a vertical or diagonal line, the back body outer diameters of the upper and lower chambers align or are stepped, and the volumes of the upper pot body and lower pot body are the same or different.

5. The dual-pot air fryer with top and bottom back blowing according to claim 1, **characterized in that** one side at the upper heating tube (3) and lower heating tube (8) in the upper and lower chambers respectively extends out of the upper metal insulation layer (2) and lower metal insulation layer (7) and is provided with NTC temperature sensors (21), and the NTC temperature sensors are respectively connected to the power board assembly (15) in the body through lines.

6. The dual-pot air fryer with top and bottom back blowing according to claim 1, **characterized in that** the upper motor (19) at the upper air guide cover (31) and the lower motor (14) at the lower air guide cover (28) are respectively provided with hollow holes, the outer diameters of the upper metal lining (22) and lower metal lining (26) in the upper and lower chambers respectively form a main cold air chamber with the body inner diameter and base (27), the main cold air chamber is divided into upper and lower main cold air chambers through a plastic partition (24), the hoods at the upper frying basket lining (23) and lower frying basket lining (25) in the upper and lower chambers are respectively provided with upper and lower secondary cold air chambers, the upper and lower edges of the hoods at the upper frying basket lining and lower frying basket lining in the upper and lower secondary cold air chambers are respectively provided with through holes, the through holes respectively communicate with the lower holes at the edge of the base of the lower chamber opening of the body, and the upper holes at the edge of the upper metal lining of the upper chamber opening of the body, the body side outer diameter at the plastic partition is respectively provided with upper air outlets (30) and lower air outlets (29) above and below, the upper air guide cover and lower air guide cover are respectively connected to the upper air outlets and lower air outlets of the body, the other side of the body or the base is provided with air inlets, and the edges of the plastic partition on both sides of the body opening are respectively provided with notches (2401).

7. The dual-pot air fryer with top and bottom back blowing according to claim 6, **characterized in that** the base (27) above the inner diameter at the bottom opening of the body is provided with a plastic bottom plate (32), the lower holes at the edge of the base of the lower chamber opening of the body are set at one end of the plastic bottom plate, the plastic bottom plate is provided with through holes, and the external power cord of the power board assembly (15) in the body extends out of one side of the base through the plastic partition (24) and plastic bottom plate.

8. The dual-pot air fryer with top and bottom back blowing according to claim 6, **characterized in that** the upper air outlets (30) and lower air outlets (29) of the body are simultaneously set on the upper and lower sides of the plastic partition (24) in the body respectively.

9. The dual-pot air fryer with top and bottom back blowing according to claim 6, **characterized in that** the air inlets of the base (27) are equidistantly distributed openings at the bottom or both sides.

10. The dual-pot air fryer with top and bottom back blowing according to claim 6, **characterized in that** both sides of the upper metal lining (22) and lower metal lining (26) in the body, and the back of the upper metal lining are respectively provided with stamped concave-convex surfaces.

11. The dual-pot air fryer with top and bottom back blowing according to claim 6, **characterized in that** the through holes at the upper and lower edges of the hoods of the upper frying basket lining (23) and lower frying basket lining (25) in the upper and lower secondary cold air chambers respectively communicate through the partition holes at the plastic partition (24), and one end of the plastic partition extends out and is located between the body side openings at the upper and lower edges of the hoods of the upper frying basket lining and lower frying basket lining.

12. The dual-pot air fryer with top and bottom back blowing according to claim 6, **characterized in that** the notches (2401) of the plastic partition (24) or are set at the back, and the body back outer diameter corresponding to the notches is respectively provided with upper air outlets (30) and lower air outlets (29) above and below.
